# EUROPEAN PATENT APPLICATION

(11) **EP 2 519 059 A1**
(43) Date of publication of application: **31.10.2012**
(21) Application number: 11183913.0
(22) Date of filing: 05.10.2011
(51) Int. Cl.: H04W 52/02, G06F 3/048, G06F 1/32

(54) **Mobile communication device with low power consumption and method for operating the same**

(30) Priority: 25.04.2011 TW 100114258
(71) Applicant: Acer Incorporated, New Taipei City 221 (TW)
(72) Inventor: Chang, Yu-Min, New Taipei City 221 (TW)
(74) Representative: Becker Kurig Straus

(57) **Abstract**

When a mobile communication device receives a call notification or is used for making a phone call, it is determined whether a touch event occurs on a touch panel of the mobile communication device and whether the touch event matches an error condition. If the touch event matches the error condition, the mobile communication device is configured to operate in a power-saving mode.

## Description

### Field of the Invention

The present invention is related to a mobile communication device and method for operating the same according to the pre-characterizing clauses of claims 1 and 6.

### Background of the Invention

With rapid shrinkage in the size of electronic devices, there is less room available for traditional input devices such as keypads. Therefore, touch panels capable of receiving touch commands and displaying images have become more and more popular for thin mobile communication devices. Since the power for operating a mobile communication device is normally supplied by batteries, reducing power consumption is an importance issue.

In a mobile communication device, a backlight module is configured to provide backlight for operating the touch panel, while a display module is configured to activate the touch panel. With the backlight module and the display module consuming more power than most of the other devices in the mobile communication device, the touch panel is generally not in use when the user is in the middle of a call. In a mobile communication device, a proximity sensor is typically used for detecting whether the touch panel is moved to the vicinity of a user's face or other objects, thereby shutting down the backlight module and the display module accordingly for reducing power consumption. However, the proximity sensor increases system complexity and manufacturing costs.

### Summary of the Invention

This in mind, the present invention aims at providing a method for lowering power consumption of a mobile communication device and a mobile communication device with low power consumption.

This is achieved by a method for lowering power consumption of a mobile communication device according to claim 1 and a mobile communication device with low power consumption according to claim 6. The dependent claims pertain to corresponding further developments and improvements.

As will be seen more clearly from the detailed description following below, the claimed method for lowering power consumption of a mobile communication device includes determining whether the mobile communication device receives a trigger event; determining whether a touch event occurs on a touch panel of the mobile communication device when receiving the trigger event; determining whether the touch event matches an error condition; and operating the mobile communication device in a power-saving mode when the touch event matches the error condition.

As will be seen more clearly from the detailed description following below, the claimed mobile communication device with low power consumption includes a touch panel; a trigger event judging module configured to determine whether the mobile communication device receives a trigger event; a touch event detecting module configured to determine whether a touch event occurs on the touch panel when receiving the trigger event; an error judging module configured to determine whether the touch event matches an error condition; and a control module configure to operate the mobile communication device in a power-saving mode when the touch event matches the error condition.

### Brief Description of the Drawings

In the following, the invention is further illustrated by way of example, taking reference to the accompanying drawings. Thereof
FIG. 1 is a functional diagram of a mobile communication device according to a first embodiment of the present invention;
FIG. 2 is a flowchart chart illustrating the operation of the mobile communication device according to the first embodiment of the present invention;
FIG. 3 illustrates an exemplary touch event detected by a touch event detecting module of the present invention;
FIG. 4 illustrates another exemplary touch event detected by the touch event detecting module of the present invention;
FIG. 5 illustrates another exemplary touch event detected by the touch event detecting module of the present invention;
FIG. 6 is a functional diagram of a mobile communication device according to a second embodiment of the present invention; and
FIG. 7 is a flowchart chart illustrating the operation of the mobile communication device according to the second embodiment of the present invention.

### Detailed Description

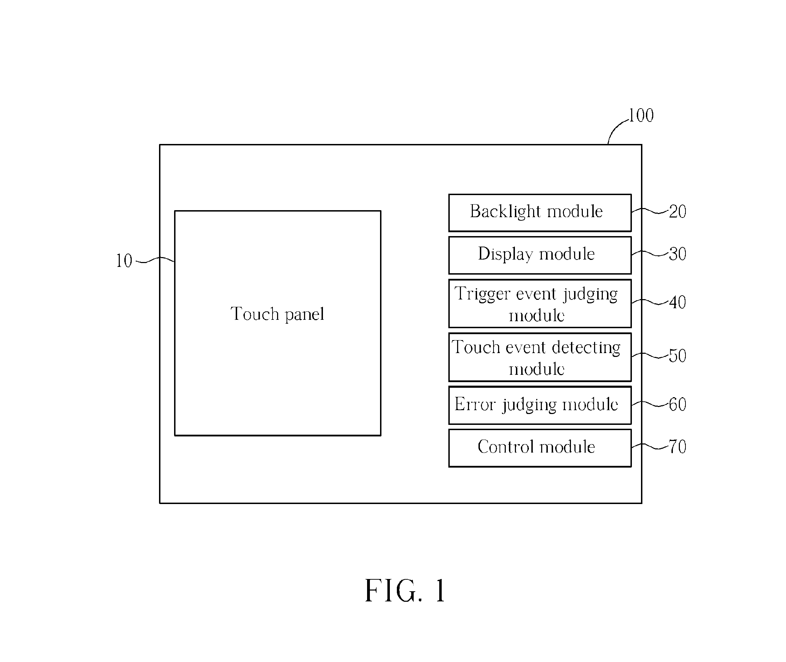

FIG. 1 is a functional diagram of a mobile communication device 100 according to a first embodiment of the present invention. The mobile communication device 100 includes a touch panel 10, a backlight module 20, a display module 30, a trigger event judging module 40, a touch event detecting module 50, an error judging module 60, and a control module 70. In addition to displaying images, the touch panel 10 may also receive touch commands directly inputted by the user. The backlight module 20 is configured to provide backlight for the touch panel to display images, and the display module 30 is configured to activate the touch panel 10. When the backlight module 20 and the display module 30 are turned on, the mobile communication device 100 operates in a normal mode which consumes more power. When the backlight module 20 and the display module 30 are turned off, the mobile communication device 100 operates in a power-saving mode which consumes less power.

The trigger event judging module 40 is configured to determine whether the mobile communication device 100 receives a trigger event. The trigger event may be associated with an incoming call notification or a dial-out action. The touch event detecting module 50 is configured to determine whether a touch event occurs on the touch panel 10. The error judging module 60 is configured to determine whether the touch event matches an error condition. The control module 70 is configured to operate the backlight module 20 and the display module 30 according to the detecting/determining results of the trigger event judging module 40, the touch event detecting module 50, and the error judging module 60.

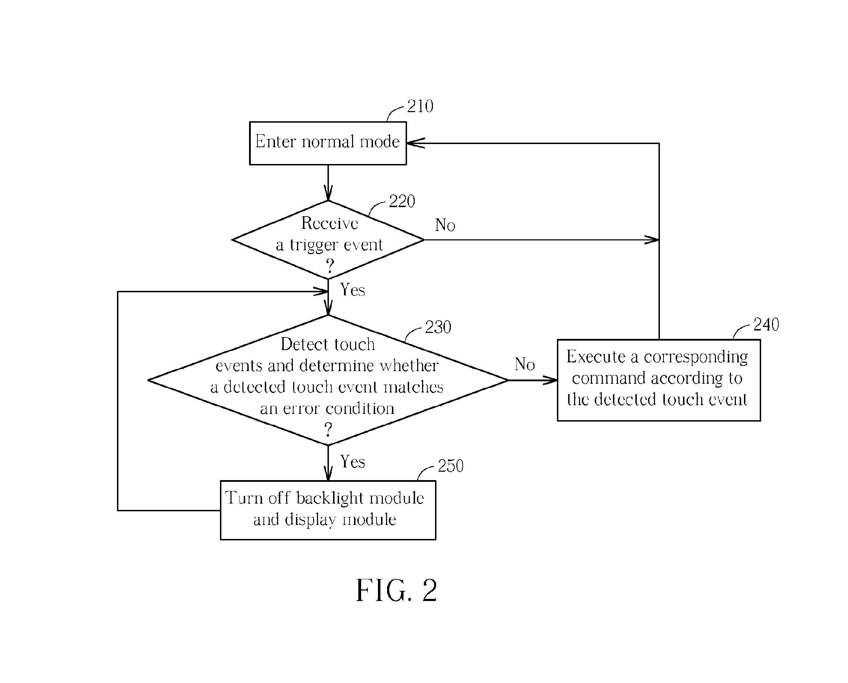

FIG. 2 is a flowchart chart illustrating the operation of the mobile communication device 100 according to the first embodiment of the present invention. FIG. 2 includes the following steps:
- Step 210:: the mobile communication device 100 enters the normal mode; execute step 220.
- Step 220:: determine whether the mobile communication device 100 receives a trigger event; if yes, execute step 230; if no, execute step 210.
- Step 230:: detect touch events and determine whether a detected touch event matches an error condition; if yes, execute step 250; if no, execute step 240.
- Step 240:: execute a corresponding command according to the detected touch event; execute step 210.
- Step 250:: turn off the backlight module and the display module; execute step 230.

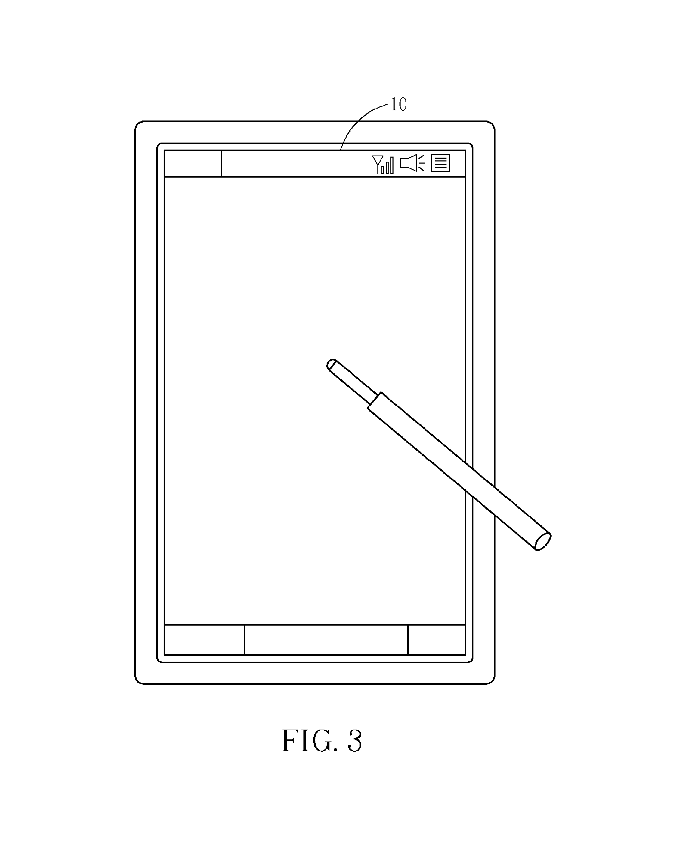

After the mobile communication device 100 enters the normal mode in step 210, the trigger event judging module 40 is configured to determine whether the mobile communication device 100 receives a trigger event in step 220 (such as determining whether the mobile communication device 100 receives an incoming call or is dialing out). The touch event detecting module 50 is then triggered upon receiving the trigger event. FIGs. 3, 4 and 5 illustrate exemplary touch events detected by the touch event detecting module 50.

After receiving an incoming call notification, the user may issue a touch command on the display panel 10 using his finger or a touch pen in order to ignore the incoming call for some reason. When dialing out, the user may select a contact number or input a number on the display panel 10 using his finger or a touch pen. As depicted in FIG. 3, the size of contact area associated with this touch event is similar to that of a dot.

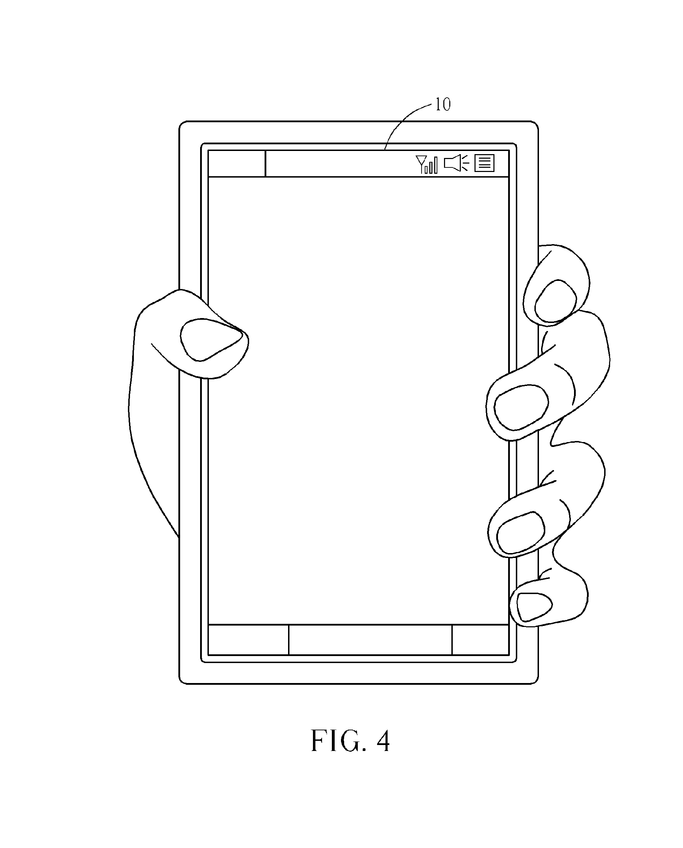

After receiving an incoming call notification or dialing out, the user may hold the display panel 10 for subsequent conversation. As depicted in FIG. 4, the size of contact area associated with this touch event is similar to that of five finger tips.

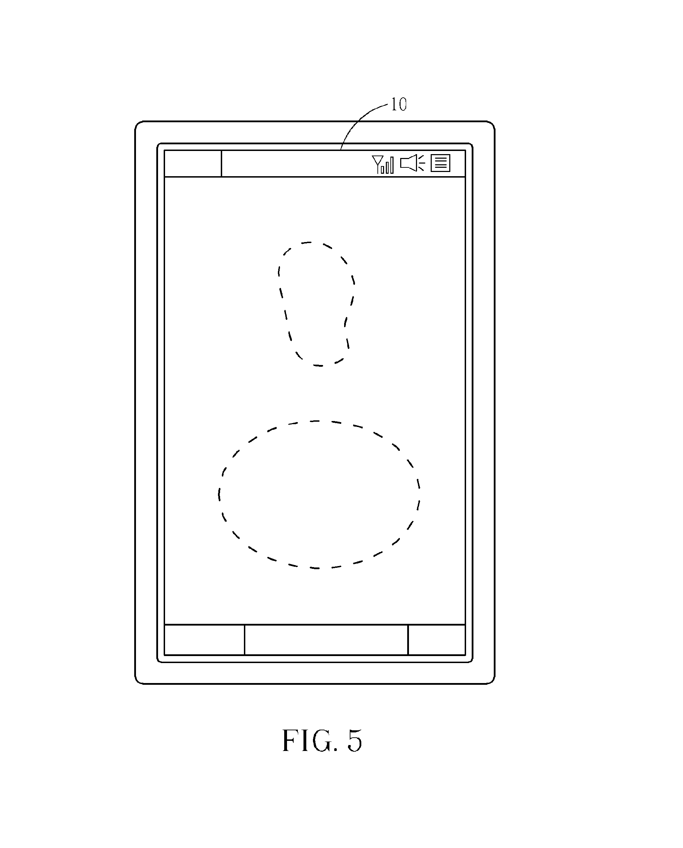

During the conversation, the user may put the display panel 10 near his ear. As depicted in FIG. 5, the size of contact area associated with this touch event is similar to that of partial face or ear.

In step 230, the touch event detecting module 50 is configured to detect whether a touch event occurs on the touch panel 10 after receiving the trigger event. After detecting a touch event, the touch event detecting module 50 then triggers the error judging module 60 for determining whether the detected touch event matches an error condition. The error condition may be associated with the size of the contact area of the detected touch event. For example, for the touch event depicted in FIG. 3, the error judging module 60 may determine that the touch event does not match the error condition (the contact area resembles a dot whose area is smaller than a predetermined area) and is thus a valid user command. For the touch event depicted in FIG. 4, the error judging module 60 may determine that the touch event matches the error condition (the contact area resembles five finger tips whose area is larger than the predetermined area) and is thus an invalid user command. For the touch event depicted in FIG. 5, the error judging module 60 may determine that the touch event matches the error condition (the contact area resembles partial face or ear whose area is larger than the predetermined area) and is thus an invalid user command.

Therefore, if the error judging module 60 determines that the touch event does not match the error condition, the mobile communication device 100 is configured to execute corresponding command in step 240, such as ignoring an incoming call or dialing out according to user command. If the error judging module 60 determines that the touch event matches the error condition, it means that the user is or is about to be in calling process. The mobile communication device 100 is thus configured to shut down the backlight module and the display module 30 so that the mobile communication device 100 may enter the power-saving mode during the call.

As well-known to those skilled in the art, the electromagnetic standards of a mobile device are based on SAR (specific absorption rate) instead of on the ration of its maximum/minimum output power. SAR is a measure of the rate at which energy is absorbed by the body when exposed to a radio frequency electromagnetic field. According to ICNIRP (International Commission on Non-Ionizing Radiation Protection), the recommended SAR value should not exceed 2.0 W/Kg. According to FCC (Federal Communications Commission), the recommended SAR value should not exceed 1.6 W/Kg.

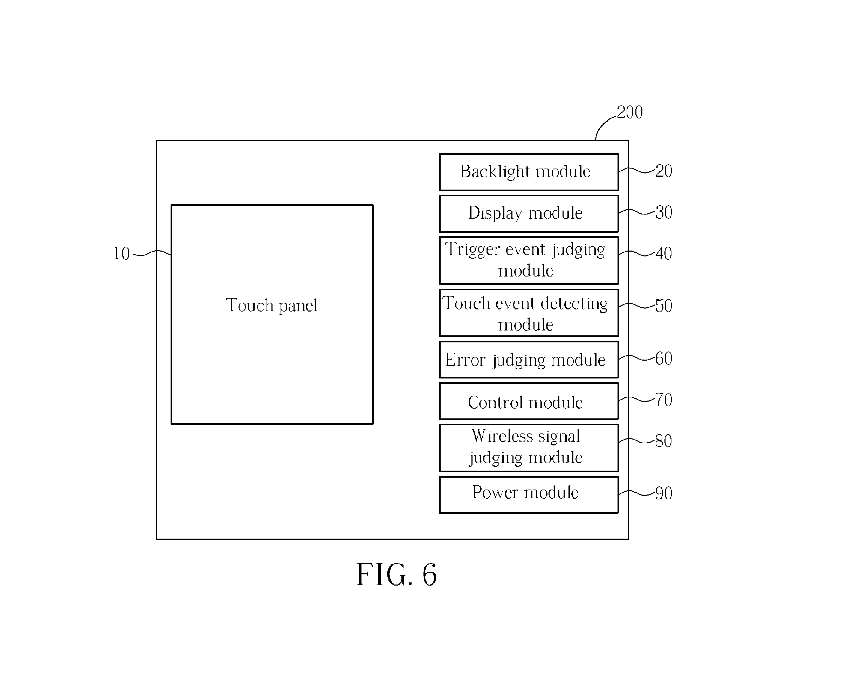

FIG. 6 is a functional diagram of a mobile communication device 200 according to a second embodiment of the present invention. The mobile communication device 200 includes a touch panel 10, a backlight module 20, a display module 30, a trigger event judging module 40, a touch event detecting module 50, an error judging module 60, a control module 70, a wireless signal judging module 80, and a power module 90. The touch panel 10, the backlight module 20, the display module 30, the trigger event judging module 40, the touch event detecting module 50, the error judging module 60, and the control module 70 of the mobile communication device 200 according to the second embodiment of the present invention have the same functions as corresponding modules in the mobile communication device 100 according to the first embodiment of the present invention. However, the mobile communication device 200 further includes the wireless signal judging module 80 and the power module 90. The wireless signal judging module 80 is configured to determine whether the signal quality during a call matches a predetermined standard. The power module 90 is configured to supply power for operating the mobile communication device 200 during the call.

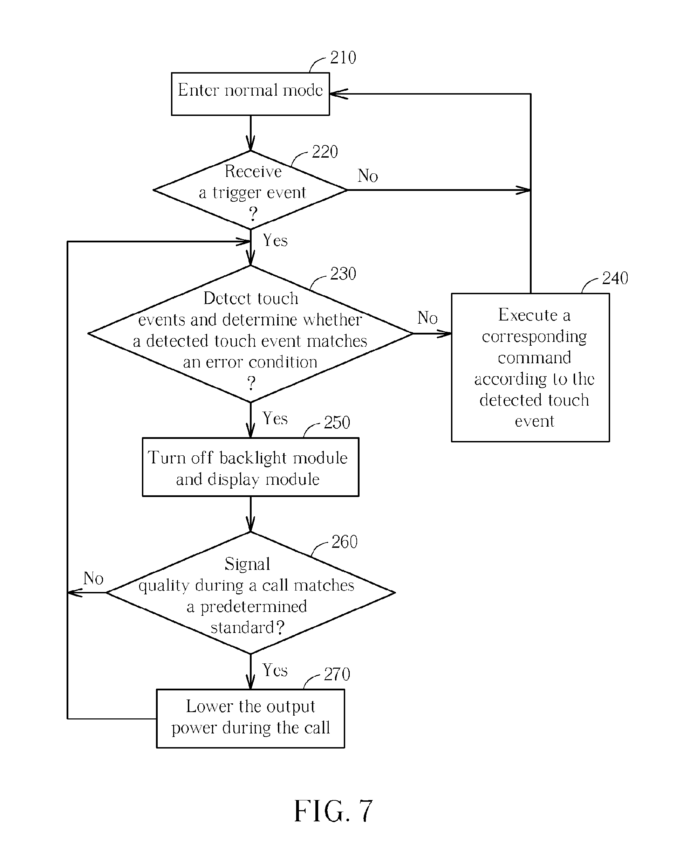

FIG. 7 is a flowchart chart illustrating the operation of the mobile communication device 200 according to the second embodiment of the present invention. FIG. 7 includes the following steps:
- Step 210:: the mobile communication device 200 enters the normal mode; execute step 220.
- Step 220:: determine whether the mobile communication device 200 receives a trigger event; if yes, execute step 230; if no, execute step 210.
- Step 230:: detect touch events and determine whether a detected touch event matches an error condition; if yes, execute step 250; if no, execute step 240.
- Step 240:: execute a corresponding command according to the detected touch event; execute step 210.
- Step 250:: turn off the backlight module and the display module; execute step 260.
- Step 260:: determine whether the signal quality during a call matches a predetermined standard; if yes, execute step 270; if no, execute step 230.
- Step 270:: lower the output power during the call; execute step 230.

In steps 210-250, the operations of the mobile communication device 200 are the same as those of the mobile communication device 100. After turning off the backlight module and the display module in step 250, the mobile communication device 200 is further configured to determine whether the signal quality during the call matches the predetermined standard in step 260. If the signal quality during the call is good, the mobile communication device 200 is configured to lower the output power of the power module 90 in step 270. If the signal quality during the call is poor, the mobile communication device 200 is configured to maintain the original output power of the power module 90. Therefore, in addition to lowering power consumption during a call, the mobile communication device 200 according to the second embodiment of the present invention may further lower SAR (minimize the impact of electromagnetic radiation on human body) without influencing communication quality.

In the embodiments of the present invention, the touch panel 10 may be capacitive, resistive or other types of LCD touch panels. The backlight module 20 may include light sources such as light emitting diodes (LEDs) or cold cathode fluorescent lamps (CCFLs). The mobile communication device 100 or 200 may be a personal digital assistant (PDA), a mobile phone, a smart phone, or a PDA phone. The present invention may lower power consumption of mobile communication devices and lower SAR (minimize the impact of electromagnetic radiation on human body) without influencing communication quality.

## Claims

1. A method for lowering power consumption of a mobile communication device, comprising:
determining whether the mobile communication device receives a trigger event;
**characterized by**
determining whether a touch event occurs on a touch panel of the mobile communication device when receiving the trigger event;
determining whether the touch event matches an error condition; and
operating the mobile communication device in a power-saving mode when the touch event matches the error condition.

2. The method of claim 1, further **characterized by**:
detecting a contact area when the touch event occurs on the touch panel; and
determining that the touch event matches the error condition when a size of the contact area is larger than a predetermined value.

3. The method of claim 1, further **characterized by**:
operating the mobile communication device in the power-saving mode by turning off a backlight module or a display module of the mobile communication device.

4. The method of claim 1, further **characterized in that**:
the trigger event comprises an incoming call notification or a dial-out action.

5. The method of claim 4, further **characterized by**:
detecting a signal quality of the mobile communication device when the touch event matches the error condition; and
lowering a power output of the mobile communication device when the signal quality of the mobile communication device matches a predetermined standard.

6. A mobile communication device with low power consumption, comprising:
a touch panel;
a trigger event judging module configured to determine whether the mobile communication device receives a trigger event;
**characterized by**
a touch event detecting module configured to determine whether a touch event occurs on the touch panel when receiving the trigger event;
an error judging module configured to determine whether the touch event matches an error condition; and
a control module configured to operate the mobile communication device in a power-saving mode when the touch event matches the error condition.

7. The mobile communication device of claim 6, further **characterized in that** the error judging module is configured to:
detect a contact area when the touch event occurs on the touch panel; and
determine that the touch event matches the error condition when a size of the contact area is larger than a predetermined value.

8. The mobile communication device of claim 6, further **characterized by**:
a backlight module configured to provide backlight for operating the touch panel; and
a display module configured to activate the touch panel; and
**characterized in that** the control circuit is configured to turn off the backlight module or the display module when the error judging module determines that the touch event matches the error condition.

9. The mobile communication device of claim 6, further **characterized in that** the trigger event judging module is configured to determine whether the mobile communication device receives the trigger event which is associated with an incoming call notification or a dial-out action.

10. The mobile communication device of claim 9, further **characterized by**:
a power module configured to provide power for operating the mobile communication device during a call; and
a wireless signal judging module configured to determine whether a signal quality of the mobile communication device during the call matches a predetermined standard; and
**characterized in that** the control module is configured to lower an output of the power module when the signal quality of the mobile communication device during the call matches the predetermined standard.
